# EUROPEAN PATENT APPLICATION

(11) **EP 4 744 931 A1**
(43) Date of publication of application: **20.05.2026**
(21) Application number: 25216007.2
(22) Date of filing: 14.11.2025
(51) Int. Cl.: B60K 35/81, B60K 35/21

(54) **VEHICLE CHASSIS OPERATION VISUALIZATION METHOD, APPARATUS, AND DISPLAY DEVICE**

(30) Priority: 15.11.2024 KR 20240163508; 10.11.2025 KR 20250168404
(71) Applicant: HL Mando Corporation, Pyeongtaek-si, Gyeonggi-do 17962 (KR)
(72) Inventor: YOO, Byungwook, 17962 Pyeongtaek-si, Gyeonggi-do (KR); JIN, Yunsoo, 17962 Pyeongtaek-si, Gyeonggi-do (KR)
(74) Representative: Pfenning, Meinig & Partner mbB

(57) **Abstract**

A vehicle motion visualization method is characterized by including a step of displaying a vehicle model and a step of displaying at least one graphic element of the vehicle model by changing it to visually indicate state changes of chassis components, based on motion information reflecting the steering characteristics of the vehicle's chassis components, including the steering device.

## Description

### BACKGROUND

### 1. Field

The present disclosure relates to a method, an apparatus, and a display device for visualizing operations of vehicle chassis.

### 2. Description of the Related Art

As vehicles have become increasingly advanced and modernized, consumers' primary purchasing considerations extend beyond mere mobility. In response to this shift in consumer trends, automotive manufacturers are appealing to consumers by providing in-vehicle infotainment on vehicle displays that goes beyond simple information presentation to incorporate elements of entertainment.

Currently, most infotainment systems primarily provide peripheral elements such as climate control operation during driving, media playback, and driving status or environment information. In contrast, key information related to vehicle dynamicssuch as steering, braking, and suspension-is not presented as another central axis of the user interface that drivers or passengers can intuitively see and experience.

### SUMMARY

According to one embodiment, a vehicle chassis operation visualization method comprises: displaying a vehicle model; and, based on operation information of at least one chassis component among a steering device, a brake device, and a suspension device, changing at least one graphic element of the vehicle model to visually indicate a state change of the chassis component.

In the vehicle chassis operation visualization method according to an embodiment of the present invention, the graphic element includes at least one of transparency, color, brightness, contrast, and animation effects.

The state change of the chassis component in the vehicle operation visualization method according to an embodiment of the present invention includes at least one of the steering angle of the steering device, the braking force of the brake device, or the stroke amount of the suspension device.

In the vehicle chassis operation visualization method according to an embodiment of the present invention, the method further comprises displaying, on a display, a warning color or a visual emphasis effect based on the state change of the chassis component being equal to or greater than a preset threshold.

In the vehicle chassis operation visualization method according to an embodiment of the present invention, the act of changing at least one graphic element of the vehicle model for display includes changing a transparency of the vehicle model so that the vehicle model becomes transparent, based on the state change of the chassis component being equal to or greater than a preset threshold, and displaying the changed vehicle model.

In the vehicle operation visualization method according to an embodiment of the present invention, the step of displaying by changing at least one of the graphic elements of the vehicle model includes displaying by changing the transparency of the vehicle model to make it opaque based on the state change of the chassis component being restored below a preset threshold.

The vehicle chassis operation visualization method according to an embodiment of the present invention further comprises, based on the state change of the chassis component being at least a preset threshold, displaying a model of the chassis component.

In the vehicle chassis operation visualization method according to an embodiment of the present invention, the method further comprises, based on the state change of the chassis component being restored to less than the preset threshold, removing the chassis component model of the chassis component.

The vehicle operation visualization method according to an embodiment of the present invention further comprises: a step of acquiring operation data from at least one chassis component among the steering device, brake device, and suspension device of the vehicle; and a step of generating operation information of the at least one chassis component based on the operation data.

In the vehicle chassis operation visualization method according to an embodiment of the present invention, a road surface condition of the vehicle is estimated, and, in response to the estimated road surface condition, a visual effect of a floor surface of the vehicle model or a portion of a vehicle body is changed for display.

The vehicle operation visualization method according to an embodiment of the present invention includes operation information of the steering device, which comprises at least one of the steering angle, steering torque, or rear wheel steering angle of the steering device.

The vehicle motion visualization method according to an embodiment of the present invention displays the rotation direction around the front or rear wheels of the vehicle model changing according to the magnitude and direction of the steering angle, corresponding to the steering angle of the steering device.

The vehicle motion visualization method according to an embodiment of the present invention displays different visual effects on the front and rear wheels respectively when the front and rear wheels of the vehicle model rotate in opposite directions.

The vehicle motion visualization method according to an embodiment of the present invention displays a virtual path guidance line around the front or rear wheels of the vehicle model corresponding to the steering angle of the steering device.

The path guidance line of the vehicle motion visualization method according to an embodiment of the present invention is displayed as a curved shape based on the center point of the steering angle, and the curvature of the curve increases as the magnitude of the steering angle increases.

A vehicle operation visualization device according to an embodiment of the present invention for solving the above technical problem comprises: a memory; and a processor connected to said memory, wherein said processor displays a vehicle model and, based on operational information of at least one chassis component among the vehicle's steering device, brake device, and suspension device, visually displays changes in the state of said chassis component by modifying and displaying at least one graphic element of said vehicle model.

The processor according to an embodiment of the present invention visually indicates the state change of the chassis component by altering at least one of the transparency, color, brightness, contrast, or animation effect among the graphic elements.

According to an embodiment of the present invention, the processor modifies the graphic element based on at least one of the steering angles of the steering device, the braking force of the brake device, or the stroke amount of the suspension device, in response to a state change of the chassis component.

According to an embodiment of the present invention, the processor is configured to control the display of a warning color or a visual emphasis effect on the display when the state change of the chassis component is equal to or greater than a preset threshold.

According to another embodiment of the present invention for solving the above technical problem, the display device displays at least one graphic element of the vehicle model by changing it to visually indicate a state change of at least one chassis component, based on operational information of at least one chassis component among the vehicle's steering device, brake device, and suspension device.

According to another embodiment of the present invention, a vehicle chassis operation visualization method may include: generating chassis motion information, including at least one of steering state information, suspension state information, brake state information, and powertrain information, by using chassis component data of the vehicle; and generating motion graphics for a virtual modeled vehicle corresponding to the vehicle by using the chassis motion information.

According to another embodiment of the present invention, the step of generating the motion graphics in the vehicle chassis operation visualization method may include changing the transparency of a body of the virtual modeled vehicle in response to the chassis motion information.

According to another embodiment of the present invention, the step of generating the motion graphics in the vehicle chassis operation visualization method may include changing the transparency of the body of the virtual modeled vehicle when a motion change is detected in a wheel of the vehicle, in response to the chassis motion information.

In another embodiment of the vehicle motion visualization method according to the present invention, the step of generating motion graphics may create visual effects on the wheels of the virtual modeling vehicle corresponding to the wheels of the actual vehicle experiencing motion changes.

In another embodiment of the vehicle motion visualization method according to the present invention, the step of generating motion graphics may change the steering angle of the front or rear wheels of the virtual modeling vehicle in response to steering state information.

In another embodiment of the present invention, the step of generating motion graphics for the vehicle motion visualization method may create visual effects on the wheel whose steering angle changes, whether it be the front wheel or rear wheel of the virtual modeling vehicle.

The step of generating motion graphics for the vehicle motion visualization method according to another embodiment of the present invention may generate different visual effects on the front and rear wheels when the front and rear wheels of the virtual modeling vehicle change in opposite directions.

In another embodiment of the present invention, the step of generating motion graphics for the vehicle operation visualization method may include generating virtual path guidance information on the bottom surface of the virtual modeling vehicle when changing the steering angle of the front or rear wheels of the virtual modeling vehicle.

In another embodiment of the vehicle operation visualization method according to the present invention, the path guidance information may be displayed as a virtual guidance line centered on the wheel whose steering angle is changed.

In another embodiment of the present invention, the step of generating motion graphics for the vehicle operation visualization method may generate a visual alarm or warning sound when the steering angle of the rear wheels of the virtual modeling vehicle changes.

In another embodiment of the present invention, the step of generating motion graphics for the vehicle operation visualization method may include changing the height of each of the multiple wheels of the virtual modeling vehicle in response to the suspension status information.

In another embodiment of the vehicle motion visualization method according to the present invention, the suspension status information includes the impact force input to at least one of the multiple wheels of the vehicle, and the step of generating the motion graphics may change the height of each of the multiple wheels of the virtual modeling vehicle corresponding to the impact force.

In another embodiment of the present invention, the step of generating motion graphics for the vehicle operation visualization method may include estimating road surface condition information corresponding to the impact force and modifying the bottom surface of the virtual modeling vehicle in response to said road surface condition information.

In another embodiment of the present invention, the step of generating motion graphics for the vehicle operation visualization method may create visual effects on the suspension of wheels whose height has changed beyond a predetermined threshold among the multiple wheels of the virtual modeling vehicle.

In another embodiment of the vehicle operation visualization method according to the present invention, the chassis data may include at least one of the vehicle's steering data, suspension data, brake data, and powertrain data, and may further include a step of acquiring the chassis data via the vehicle's internal communication network.

In another embodiment of the present invention, the acquisition step of the vehicle operation visualization method may acquire the chassis data via at least one of the CAN, LIN, FlexRay, or Ethernet communication protocols.

A vehicle operation visualization method according to another embodiment of the present invention displays a vehicle model and a wheel model; displaying a chassis model that includes at least one of a steering model, a suspension model, a brake model, and a powertrain model of the vehicle based on at least one of the steering state information, suspension state information, brake state information, and powertrain state information of the vehicle; and displaying the chassis model corresponding to a state change in at least one of the steering, suspension, brakes, and powertrain.

According to another embodiment of the present invention, the vehicle operation visualization method disappears based on the restoration of at least one state among the steering, suspension, brakes, and powertrain of the vehicle.

According to another embodiment of the present invention, the vehicle operation visualization method displays the chassis model based on at least one value indicating a state change in the vehicle's steering, suspension, brakes, or powertrain being equal to or above a threshold value.

According to another embodiment of the present invention, the vehicle operation visualization method causes the chassis model to disappear based on a value indicating a change in the state of at least one of the vehicle's steering, suspension, brakes, and powertrain decreasing below a threshold value.

According to another embodiment of the present invention, the vehicle operation visualization method changes the transparency of the vehicle model based on a change in the state of at least one of the steering, suspension, brakes, and powertrain of the vehicle.

According to another embodiment of the present invention, the vehicle operation visualization method makes the vehicle model transparent based on the value indicating a state change in at least one of the steering, suspension, brakes, and powertrain of the vehicle being equal to or greater than a threshold value.

According to another embodiment of the present invention, the vehicle operation visualization method displays the chassis model, which includes the steering model, based on the value indicating the change in the steering state of the vehicle being at or above a threshold value.

According to another embodiment of the present invention, the vehicle operation visualization method displays visual effects on the wheel model based on changes in the steering state of the vehicle.

Another vehicle motion visualization method according to the present invention displays the steering angle of the wheel model based on changes in the steering state of the vehicle.

Another vehicle motion visualization method according to the present invention displays the path information of the vehicle based on changes in the steering state of the vehicle.

According to another embodiment of the present invention, a vehicle operation visualization method displays a chassis model including the suspension model based on a value indicating a change in the state of the vehicle's suspension being above a threshold value.

According to another embodiment of the present invention, the vehicle motion visualization method displays the vertical movement of the wheel model based on changes in the state of the vehicle's suspension.

According to another embodiment of the present invention, the vehicle motion visualization method displays information indicating the damping force of the suspension based on changes in the state of the vehicle's suspension.

According to another embodiment of the present invention, the vehicle operation visualization method displays the chassis model, which includes the brake model, based on the value indicating the change in the vehicle's brake status being at or above a threshold value.

According to another embodiment of the present invention, the vehicle operation visualization method displays information indicating the braking force of the vehicle's brakes based on changes in the brake status.

According to another embodiment of the present invention, the vehicle operation visualization method estimates the road surface condition and modifies the bottom surface of the vehicle model in response to said road surface condition.

According to another embodiment of the present invention, the vehicle motion visualization method acquires at least one of the steering state information, suspension state information, brake state information, and powertrain state information of the vehicle via the vehicle's internal communication network.

According to another embodiment of the present invention, the vehicle motion visualization device includes a memory and a processor connected to the memory, wherein the processor displays a vehicle model and a wheel model; and displays a chassis model including at least one of a steering model, a suspension model, a brake model, and a powertrain model of the vehicle based on at least one of the steering status information, suspension status information, brake status information, and powertrain status information of the vehicle, wherein the chassis model corresponding to a change in the status of at least one of the steering, suspension, brakes, and powertrain.

A storage medium according to another embodiment of the present invention displays a vehicle model and a wheel model; and includes displaying a chassis model that includes at least one of the steering model, suspension model, brake model, and powertrain model of the vehicle based on at least one of the steering state information, suspension state information, brake state information, and powertrain state information of the vehicle, and storing a command on a computer-readable storage medium to display the chassis model corresponding to at least one state change of the steering, suspension, brakes, and powertrain of the vehicle; and a computer-readable storage medium storing a command to cause the chassis model to be displayed in response to a state change in at least one of the steering, suspension, brakes, and powertrain of the vehicle.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a block diagram showing the configuration of a vehicle operation visualization device according to one embodiment;
FIG. 2 is a block diagram showing the configuration of the sensor device according to an embodiment;
FIG. 3 is a block diagram illustrating the configuration for displaying and controlling the steering device according to the first embodiment;
FIG. 4 is a block diagram illustrating the configuration of a display device according to another embodiment;
FIG. 5 illustrates an initial screen provided in a user interface displayed on the display device during driving of a vehicle, according to another embodiment;
FIG. 6 and FIG. 7 illustrate a user interface that intuitively indicates a steering state on a display device during driving of a vehicle, according to another embodiment of the present invention;
FIG. 8 illustrates a user interface that intuitively indicates a rear-wheel steering state on a display device during driving of a vehicle, according to another embodiment of the present invention;
FIG. 9 illustrates a user interface that intuitively indicates a visual effect of a vehicle model on a display device during driving of a vehicle, according to another embodiment of the present invention;
FIG. 10 is a flowchart illustrating a vehicle chassis operation visualization method according to an embodiment of the present invention;
FIG. 11 is a flowchart illustrating a steering device operation visualization method of a vehicle according to an embodiment of the present invention;

### DETAILED DESCRIPTION

Throughout the specification, the same reference numerals denote the same components. This specification does not describe all elements of the embodiments; common content within the technical field to which the disclosed invention belongs or content overlapping between embodiments is omitted. The terms 'part, module, component, block' used in the specification may be implemented in software or hardware. Depending on the embodiments, multiple 'parts, modules, components, blocks' may be implemented as a single component, or a single 'part, module, component, block' may include multiple components.

Throughout the specification, when a part is said to be 'connected' to another part, this includes not only direct connection but also indirect connection, which includes connection via a wireless communication network.

Furthermore, when a part is said to 'include' a component, this means it may include other components unless specifically stated otherwise and does not exclude other components.

Throughout the specification, when an element is said to be located "on" another element, this includes not only cases where one element is in contact with another, but also cases where another element exists between the two elements.

Terms such as "first," "second," etc., are used to distinguish one component from another and do not limit the components to those specifically named.

Expressions in the singular include the plural unless the context clearly indicates an exception.

In each step, identification codes are used for descriptive convenience. These codes do not describe the sequence of steps, and each step may be performed in a different order from that stated unless a specific sequence is clearly indicated by the context.

The operating principles and embodiments of the disclosed invention are described below with reference to the accompanying drawings.

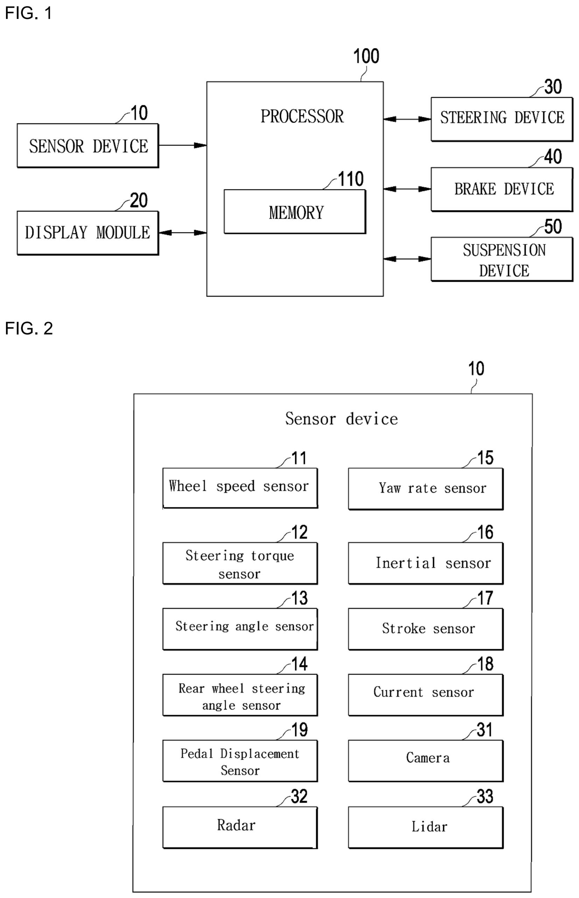

FIG. 1 illustrates the configuration of a vehicle operation visualization device according to one embodiment, and FIG. 2 illustrates the configuration of a sensor device according to one embodiment.

First, referring to FIG. 1, the vehicle operation device according to this embodiment may include a sensor device 10, a display module 20, a steering device 30, a brake device 40, a suspension device 50, and a processor 100. In this specification, the chassis components may be understood to include the steering device 30, the brake device 40, and the suspension device 50.

The sensor device 10 according to this embodiment may correspond to a configuration that detects the state and/or movement (dynamic) of a vehicle to acquire operational information of at least one chassis component, such as the steering device 30, brake device 40, or suspension device 50.

Referring to FIG. 2, the sensor device 10 according to this embodiment may include various types of sensors to acquire real-time operational information of chassis components. For example, the sensor device 10 may include a wheel speed sensor 11 that detects the vehicle's speed, a steering torque sensor 12 that precisely detects the torque applied to the steering wheel by the driver, a steering angle sensor 13 that detects the steering degree of the steering wheel, a rear steering angle sensor 14 that detects the steering angle of the rear wheels during rear-wheel steering, a yaw rate sensor 15 that detects the vehicle's yaw rate, an inertial sensor 16 that measures the vehicle's body inertia and/or wheel inertia, a stroke sensor 17 that detects the vertical displacement of the suspension in real time, a current sensor 18 that detects the drive current flowing to the suspension actuator, and a pedal displacement sensor 19 that detects the pedal input applied to the brake pedal and/or accelerator pedal, comprising at least one of these sensors.

Specifically, the wheel speed sensor 11 may include a permanent magnet that generates a magnetic field and a Hall element that detects changes in the magnetic field. The wheel speed sensor 11 can acquire rotational speed data for each wheel of the vehicle.

The steering torque sensor 12 may include a driver input torque detection section, a system steering force detection section, and a Torque Overlay Processing Module(TOPM). The steering torque sensor 12 can independently measure the driver's steering input and the steering force added by the EPS system, perform summation and calibration of the measured values, and transmit them to the processor 100.

The steering angle sensor 13 may include an encoder disk and an optical detector. The steering angle sensor 13 may correspond to a configuration that measures the vehicle's steering input and acquires steering angle data.

The rear wheel steering angle sensor 14 may include an absolute angle detection unit, a relative angle detection unit, and a steering angle calculation module (SACM). The rear wheel steering angle sensor 14 may correspond to a configuration that detects the absolute steering angle of the rear wheels, calculates the change in steering angle, and transmits precise rear wheel steering angle information to the processor 100 by synthesizing these signals.

The yaw rate sensor 15 may include a vibrating mass and a piezoelectric element. The yaw rate sensor 15 can measure the rotational angular velocity of the vehicle about its vertical axis and acquire rotational motion data of the vehicle.

The inertial sensor 16 may include an IMU sensor and/or a wheel acceleration sensor to detect the vehicle's dynamic behavior. The inertial sensor 16 can detect the vehicle's body inertia using the IMU sensor. The inertial sensor 16 can detect the vehicle's wheel inertia using the wheel acceleration sensor.

The stroke sensor 17 may include a linear displacement detection unit, a temperature compensation unit, and a stroke signal processing module (SSPM). The stroke sensor 17 detects the relative displacement between the vehicle body and the wheel due to the suspension operation of the vehicle and transmits the detected signal to the processor 100.

The current sensor 18 may include a Hall effect current detection unit, a shunt resistance detection unit, and a Current Signal Processing Module (CSPM). The current sensor 18 detects the current value applied to the damper actuator of the suspension device 50 and transmits the detected signal to the processor 100.

The pedal displacement sensor 19 is installed on the rotational axis of the accelerator pedal and/or brake pedal, detects the displacement amount of the pedal to measure the driver's pedal operation amount, and can acquire pedal input data.

However, the number or type of sensors included in the sensor device 10 is not limited to these, and may further include, for example, a camera 31, radar 32, and lidar 33. These can communicate with each other via the vehicle communication network (NT), which is the vehicle's internal communication network. For example, electrical devices included in the vehicle can exchange data using at least one of the communication methods Ethernet, MOST (Media Oriented Systems Transport), Flexray, CAN (Controller Area Network), or LIN (Local Interconnect Network).

Referring again to FIG. 1, the display module 20 may correspond to a configuration that provides the driver with various information and entertainment through video and audio. The display module 20 may include a cluster, a head-up display, a center fascia monitor, a head unit, a passenger display, and rear seat entertainment (RSE). The display module 20 may include a touch display capable of user touch operation.

The display module 20 according to this embodiment can provide the driver with graphic information or warning messages based on the operational information of the moving vehicle, using a vehicle model that implements the actual appearance of the vehicle through 3D modeling. That is, the display module 20 can intuitively display the operational status of the chassis components of the moving vehicle via a user interface. For this purpose, the display module 20 may include a separate processor (not shown). The processor may be provided integrally with the display module 20, but is not limited thereto; it may be separately included in the processor 100, and the processor 100 may also perform the role of the processor for the display module 20.

The steering device 30 may correspond to a configuration that changes the vehicle's driving direction according to the driver's steering operation. The steering device 30 may include an Electronic Power Steering (EPS) Control Module or steerby-wire (SBW), among others.

The brake device 40 may correspond to a configuration that stops the vehicle. The brake device 40 may include, for example, a brake caliper, a drum brake, and/or a Brake Control Module (EBCM).

The suspension device 50 may correspond to a configuration that ensures driving stability and improves ride comfort. The suspension device 50 may include, for example, springs, dampers, air suspension, and an Electronic Damping Control Module (EDCM). The Electronic Damping Control Module may correspond to a configuration that absorbs shocks transmitted from the road surface through the action of springs and dampers or controls the vehicle's posture. Furthermore, the Electronic Damping Control Module can control the damping force of the shock absorber in response to requests from the processor 100 based on driving conditions.

The processor 100 according to this embodiment may correspond to an entity that generates graphical information for visually representing the state of a chassis component by inputting operational information of at least one chassis component, such as the vehicle's steering device 30, brake device 40, and suspension device 50.

To this end, the processor 100 can acquire the operational information of the chassis component via at least one of an external device (not shown) and the vehicle's internal sensor 10. In this case, the processor 100 can receive the operational information input via at least one of the communication methods: CAN, LIN, FlexRay, or Ethernet. Using the operational information acquired via the vehicle communication network, the processor 100 can generate graphical information for visually representing at least one of the vehicle's steering status information, brake status information, or suspension status information.

The processor 100 can reflect the generated graphic information onto a vehicle model that visually represents the vehicle body and the vehicle's chassis components. The vehicle model may include the three-dimensional shape of the vehicle body and the three-dimensional shapes of the chassis components contained within the vehicle. That is, the vehicle model may correspond to a configuration implemented through multidimensional modeling, enabling the integrated visualization of the operational state, physical characteristics, and state changes of the vehicle or each chassis component contained within the vehicle over time. Therefore, the vehicle model in this specification may refer to a dynamic visualization model designed to precisely reflect the actual operation and state of the vehicle, rather than a simple static 3D model.

The vehicle body shape may vary depending on the vehicle type, so the exterior appearance of the vehicle model may correspond to a configuration adjusted according to the specific vehicle type. For example, the overall silhouette, wheel arrangement, and body height may differ for vehicle types such as SUVs, sedans, and hatchbacks. This vehicle class information may be pre-stored in the memory 110 or received from an external server (e.g., manufacturer server, vehicle remote control server) via the vehicle's network system. The processor 100 can select the corresponding exterior information based on the received or stored vehicle class information and apply it to the vehicle model.

The processor 100 may include a memory 110. The memory 110 may correspond to a configuration for storing programs and/or data for displaying graphical information about the vehicle model. The memory 110 may temporarily store operational information of chassis components received from a plurality of sensors included in the sensor device 10. Furthermore, the memory 110 may temporarily store processing results of chassis data received from the plurality of sensors included in the sensor device 10 by the processor 100. The memory 110 may include volatile memory such as S-RAM (Static Random Access Memory) and D-RAM (Dynamic Random Access Memory), as well as non-volatile memory such as flash memory, ROM (Read-Only Memory), and EPROM (Erasable Programmable Read-Only Memory).

The processor 100 may transmit a communication signal to the display module 20 to display the generated graphic information on the vehicle model. For example, the processor 100 may transmit a communication signal to the display module 20 to visually display graphic information for at least one of the vehicle's steering status information, brake status information, or suspension status information on the vehicle model, based on the operation information of the chassis components.

To this end, the processor 100 can identify the vehicle's driving state based on the operational information of the chassis components received from the sensor device 10. Here, the driving state may include not only the vehicle's physical state, such as speed, acceleration, yaw rate, steering angle, powertrain force, and brake force, but also driving modes such as straight driving, cornering, acceleration, braking, and driving on an incline, as well as the vehicle's attitude control state, such as normal driving, slip occurrence, understeer, and oversteer.

The processor 100 can generate graphic information that visually represents status information regarding the steering device 30, brake device 40, and/or suspension device 50 based on the operational information of the chassis components, and transmit a communication signal to the display module 20 to reflect this on the vehicle model. To this end, the processor 100 may include a micro control unit (MCU) that generates a display signal to display the graphic information visually representing the operational state of the chassis components as motion graphics on the vehicle model.

The processor 100 can generate graphic information by adjusting one or more graphic elements for the chassis components of the vehicle model or for a portion of the vehicle model's body. These graphic elements may include at least one of transparency, outline, surface color, gloss, shading, size, or animation effects.

More specifically, the processor 100 can render the vehicle body partially translucent to enable the user to observe the chassis components inside the vehicle model more clearly. For example, when it is necessary to emphasize the operational state of any one of the steering device 30, brake device 40, and suspension device 50, the processor 100 can increase the transparency of the corresponding body section to visualize the internal structure so that it is identifiable from the outside.

The processor 100 can adjust graphic elements such as the outline, surface color, or thickness of a specific chassis component to emphasize its position or shape.

The processor 100 can enhance visual realism or achieve emphasis effects on specific areas by adjusting the glossiness or contrast of surfaces. For example, the processor 100 can convey the texture or depth perception of chassis components to the user through techniques such as reflective light rendering or shading.

Additionally, the processor 100 can temporarily alter the size of specific chassis components to emphasize their operational status or importance. For example, the processor 100 can change the viewpoint of the vehicle model based on user input. The processor 100 can also control the display module 20 to perform actions such as rotating, zooming in, or zooming out the vehicle model. This viewpoint control functionality enables the user to observe specific areas of the chassis components from various angles and more precisely verify the status of chassis components of interest.

The processor 100 can apply animation effects to dynamically represent the operational state of the chassis components. For example, the processor 100 can implement animations that reflect in real time the steering angle of the steering device 30, the operational status of the brake device 40, and the vertical movement of the suspension device 50, thereby enabling the user to understand the vehicle's operational state more intuitively.

Adjustment of graphic elements by the processor 100 can be implemented through a multidimensional modeling-based vehicle model that incorporates physical changes over time and state information, extending beyond simple 3D modeling. That is, the vehicle model enables integrated visualization not only of the vehicle's exterior but also of the dynamic behavior and state changes of each chassis component.

The processor 100 can continuously monitor the operational information of the chassis components. If information exceeding a pre-set threshold criterion is received among the operational information of the chassis components, the processor 100 can generate an audible alarm or a visual warning via graphical information regarding the operational status of the corresponding chassis component. For this purpose, the memory 110 may store one or more threshold criteria defining the normal operating range for each chassis component. These threshold criteria may include, for example, cases where the steering angle changes abruptly, the braking pressure rises abnormally, or the stroke length of the suspension device 50 exceeds a set limit.

The processor 100 can provide a warning to immediately alert the driver to the potential abnormal operation of the chassis component if the received operational information exceeds any of these preset threshold criteria. The warning can be provided not only as an audible alert output through the vehicle's speakers but also visually by overlaying graphic information onto the vehicle model. For example, the processor 100 can highlight the abnormal chassis component with a red outline or add a flashing icon or animation effect to that area, enabling the driver to intuitively recognize the location of the abnormality and its severity. In cases where multiple chassis components simultaneously exceed critical thresholds, the processor 100 may prioritize warnings based on importance or risk level, and implement examples where visual warning information is output sequentially or simultaneously.

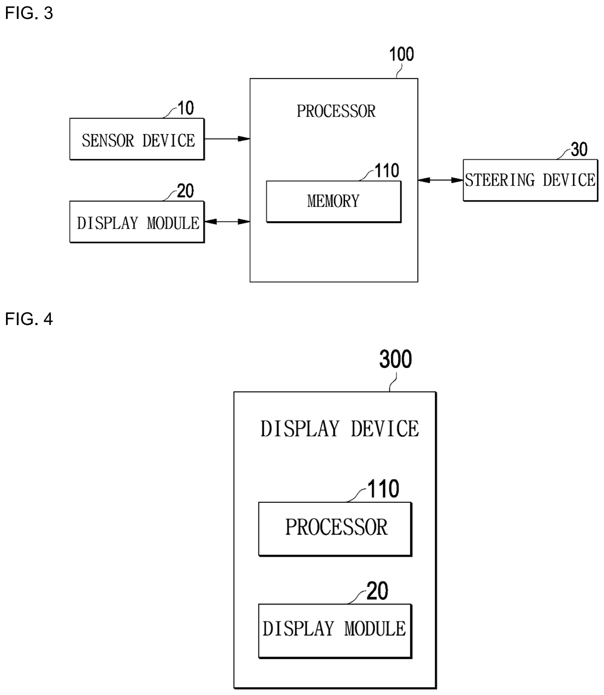

FIG. 3 is a block diagram illustrating the configuration for displaying and controlling the steering device 30 according to the first embodiment. Hereinafter, based on the foregoing, we will explain the generation of specific graphic information related to the steering device 30 among the chassis components.

Referring to FIG. 3, the processor 100 can identify the (front-wheel) steering state and/or rear-wheel steering state by receiving operation information from the sensor device 10 in relation to at least one of displaying information or controlling the steering device 30. Based on the (front-wheel) steering state and/or rear-wheel steering state, the processor 100 can provide a communication signal to the display module 20 to display the (front-wheel) steering state and/or rear-wheel steering state as vehicle model-based graphic information via the user interface.

Specifically, the processor 100 can identify the steering angle of the (front) wheels and/or the steering angle of the steering wheel based on data received from the sensor device 10. For example, the processor 100 can identify the (front wheel) steering angle and/or the steering angle of the steering wheel based on data received from the steering angle sensor 13, even when the physical connection between the steering wheel and the steering device 30 is disconnected or when the vehicle's autonomous driving mode is activated. The processor 100 can identify whether rear-wheel steering is occurring and/or the rear-wheel steering angle based on data received from the rear-wheel steering angle sensor 14.

Alternatively, the processor 100 may identify the front wheel steering angle or rear wheel steering angle based on a comparison between data received from the steering angle sensor 13 or data received from the rear wheel steering angle sensor 14 and predetermined mapping data. The mapping data may include data pairs corresponding to the steering angle of the front wheel or rear wheel for each angle of the vehicle's steering wheel.

The processor 100 can visually represent the steering state of each wheel by adjusting the wheel graphic elements of the vehicle model based on real-time steering angle information from the steering device 30. For example, if the rotation direction and angle of each wheel change according to the operation of the steering device 30, the processor 100 can correspondingly rotate the direction of each wheel within the vehicle model in real time to reflect the steering state. In this process, the processor 100 can adjust the graphic elements of each wheel in the vehicle model based on the operation information of the steering device 30. Specifically, the processor 100 can increase the transparency of the vehicle model to make the steering state of each wheel visually identifiable. That is, the processor 100 can adjust the vehicle body of the vehicle model to be transparent to a certain degree or higher, enabling the user to visually and easily identify the steering state or changes in the steering angle of each wheel.

When the front and rear wheels of a vehicle operate in opposite directions, the processor 100 can modify the graphical elements of each wheel in the vehicle model differently to distinguish their movements. For example, the processor 100 may apply a visual highlight effect, such as bright shading or sharp outline emphasis, to one set of wheels (either front or rear). At the same time, the other set of wheels may be given a relatively low transparency or color contrast effect.

The processor 100 can calculate the turning radius corresponding to the steering angle of the steering device 30. Generally, the larger the steering angle, the smaller the turning radius, and the smaller the steering angle, the larger the turning radius can be. Based on this relationship, the processor 100 can calculate the turning direction of the vehicle and its turning radius. The calculated turning radius can be used to visually represent the driving direction and trajectory of the vehicle model. Based on the calculated turning radius, the processor 100 can generate at least one of a virtual path guide line centered on each wheel of the vehicle model and a tangent direction of the virtual path guide line on the contact surface of the vehicle model. Specifically, corresponding to the steering angle of the steering device 30, a virtual path guide line may be displayed around the front or rear wheels of the vehicle model. The path guide line and its tangential direction may be configured to dynamically change according to the operation information of the steering device 30. For example, the tangential direction may be implemented as an arrow or line indicating the driving direction at each point along the path guidance line. The path guidance line may be displayed as a curved shape centered on the steering angle, with the curvature of the curve increasing as the steering angle increases.

The processor 100 may visually emphasize the steering direction and the magnitude of the turning radius by adjusting a virtual path guidance line or a graphic element indicating a tangential direction. As the steering angle increases, the curvature of the path guidance line may also increase. In such a case, the processor 100 may visually alert the driver to a sharp turn situation by changing the color of the path guidance line to a darker or redder tone. Conversely, when the steering angle is small and the vehicle is nearly in a straight-ahead state, the processor 100 may imply a stable driving condition by rendering the path guidance line thinner or in a bluish tone.

The processor 100 can visualize the difference between pre-specified steering function activation and deactivation. For example, the processor 100 can transmit a communication signal to the display module 20 so that the vehicle's predicted path based on the activation and deactivation of the rear-wheel steering function is simultaneously displayed as virtual path guidance information on the vehicle model's floor surface.

An embodiment may be provided wherein the processor 100 receives driver control input via the touch interface of the display module 20. Based on the driver's control, the processor 100 may perform at least one of viewpoint change, rotation, zoom in, or zoom out on the vehicle model to display detailed steering status information. Based on the driver's control input received via the touch interface of the display module 20, the processor 100 may set and/or change steering parameters related to a predefined steering function. Here, the steering parameters may be stored in memory 110 as mapping data, with predetermined set values based on the operation or actuation of the steering device 30.

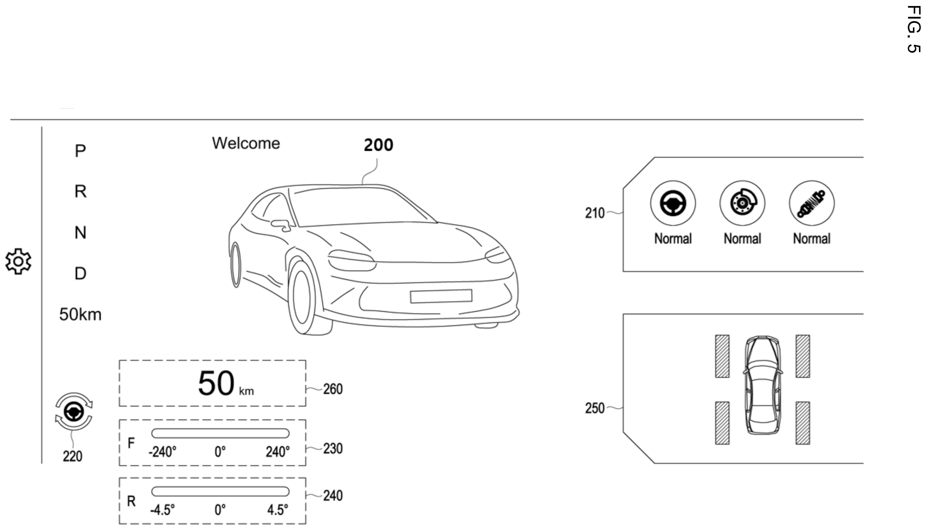

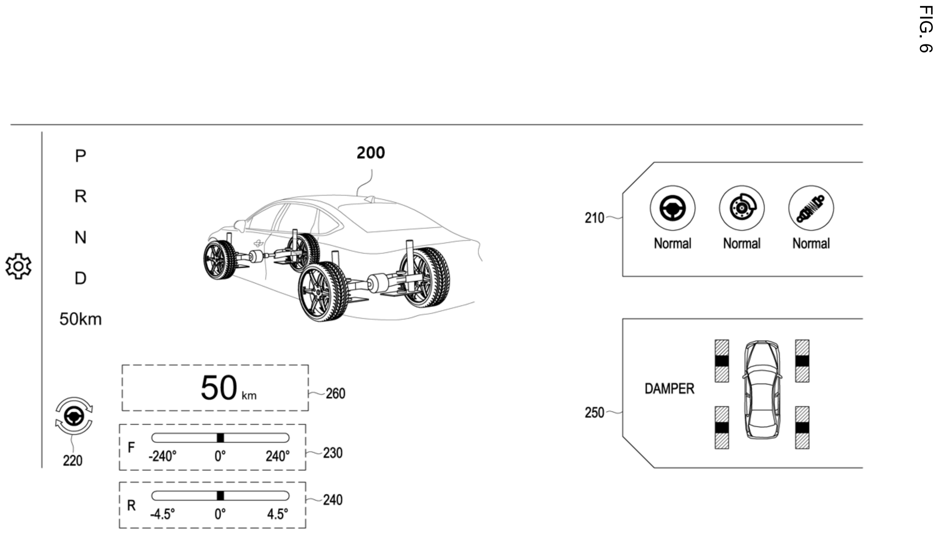

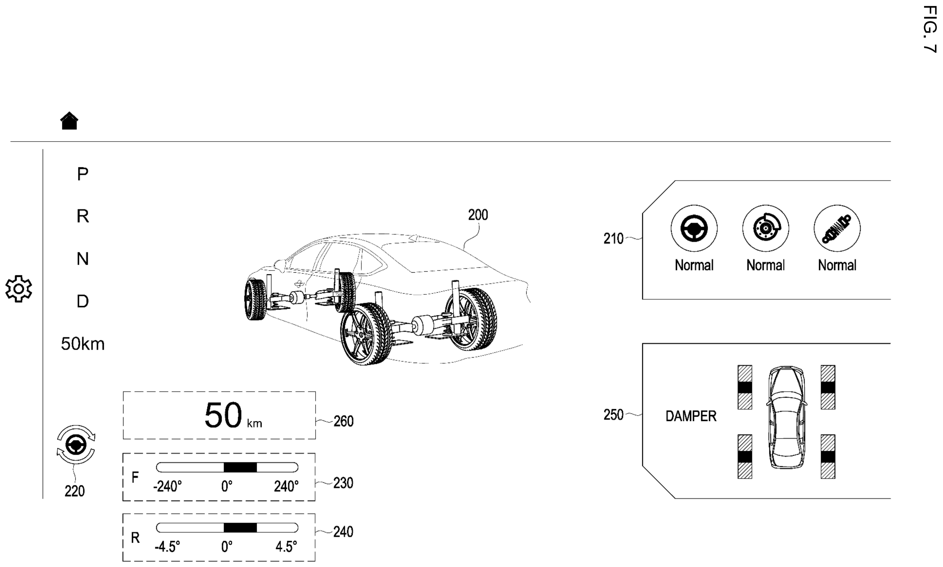

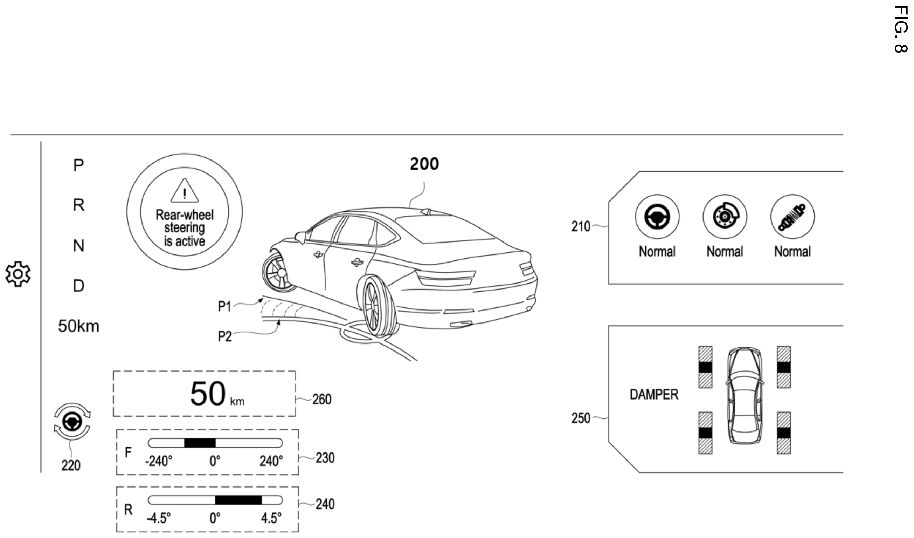

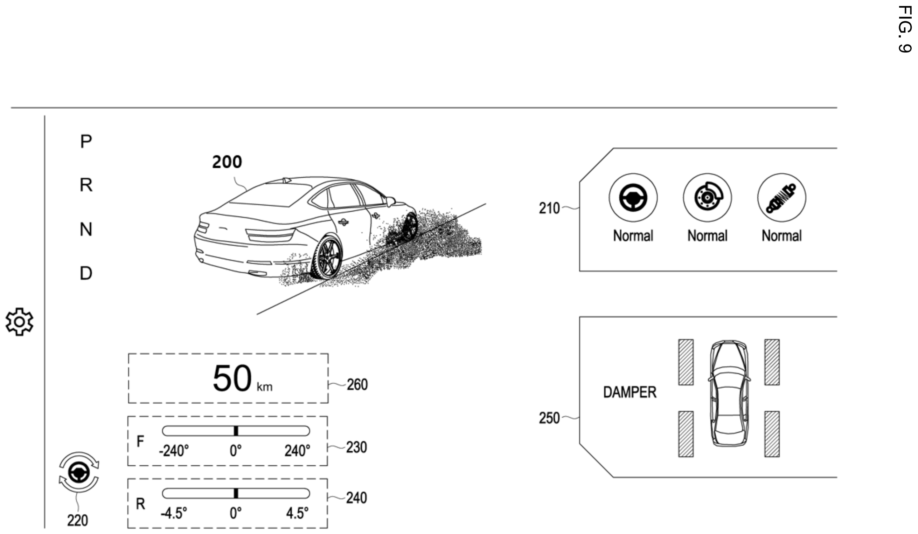

FIG. 4 is a block diagram illustrating the configuration of a display device according to another embodiment, FIG. 5 illustrates an initial screen provided in a user interface displayed on the display device during driving of a vehicle, according to another embodiment, FIG. 6 and FIG. 7 illustrate a user interface that intuitively indicates a steering state on a display device during driving of a vehicle, according to another embodiment of the present invention, FIG. 8 illustrates a user interface that intuitively indicates a rear-wheel steering state on a display device during driving of a vehicle, according to another embodiment of the present invention, and FIG. 9 illustrates a user interface that intuitively indicates a visual effect of a vehicle model on a display device during driving of a vehicle, according to another embodiment of the present invention.

Hereinafter, with reference to FIG.s 4 through 9, the generation of graphic information based on the operation information of the steering device 30 according to an embodiment of the present invention, and the application of such information to the vehicle model, will be described in detail.

Referring first to FIG. 4, the display device 300 according to an embodiment of the present invention may include a processor 100 and a display module 20.

The display device 300 may be configured to visually output, via the display module 20, graphic information acquired or generated by the processor 100. The configurations and operations of the processor 100 and the display module 20 included in the display device 300 are substantially the same as those described above with respect to the vehicle chassis operation visualization apparatus, and redundant descriptions will thus be omitted. That is, the display device 300 may be understood as an embodiment having the same technical configuration as the aforementioned vehicle operation visualization device, but with a focus on the hardware category performing the output function.

Referring to FIG. 5, the initial screen of the display device 300 may include a user interface for providing driving information, including the vehicle model 200 and the operational status of chassis components.

As shown in FIG. 5, the user interface on the initial screen displays the vehicle model 200, chassis setting indicator 210, steering wheel indicator 220, front wheel steering indicator 230, rear wheel steering indicator 240, suspension indicator 250, and speed indicator 260. To this end, the processor 100 may retrieve the last chassis control mode stored in the memory 110 from the previous drive and display it on the display module 20.

The chassis setting indicator 210 may correspond to a configuration that clearly displays, with text, which mode each of the steering, brakes, and suspension is set to. Specifically, the chassis setting indicator 210 may provide a user interface for manipulating the chassis control mode of the steering, brakes, or suspension. For example, when the driver selects one of Normal, Comfort, or Sport, the chassis setting indicator 210 may set the initial values for each chassis component according to the driver's selected mode.

The steering indicator 220 may be configured to provide an animated rotation based on the driver's steering wheel operation status.

The front wheel steering indicator 230 may include a graphic element that can display the actual steering state of the front wheels based on the driver's steering wheel operation, and can display it intuitively in real time according to the steering state of the front wheels.

The rear wheel steering indicator 240 may include a graphic element that can display the steering state of the rear wheels when rear wheel steering is occurring, and can display it intuitively in real time based on the steering state of the rear wheels.

The suspension indicator 250 may include graphical elements that can display the suspension stress (damping force) applied to each wheel in real time, reflecting the suspension stress applied to each wheel when passing over irregular road surfaces or when the suspension device 50 is damping. and can display this information in real time and intuitively based on the suspension status of each wheel.

The processor 100 can generate a control signal to display steering status information using at least one of the vehicle model 200, the steering wheel indicator 220, the front wheel steering indicator 230, or the rear wheel steering indicator 240.

Referring to FIG. 6 and FIG. 7, the processor 100 adjusts the graphic elements of each wheel of the vehicle model 200 based on the operation information of the steering device 30, and may increase the transparency of the vehicle body of the vehicle model 200 so that the steering state of each wheel is visually identifiable.

Referring to FIG. 6, the vehicle model 200 is intuitively understood to be currently driving straight through the steering indicator 220, front wheel steering indicator 230, and rear wheel steering indicator 240. In contrast, as shown in FIG. 7, the front wheel steering indicator 230 and rear wheel steering indicator 240 indicate that the vehicle model 200 is steering to the right, with both front and rear wheels turning to the right.

When the vehicle transitions from straight driving to steering right, a natural transition from FIG. 6 to FIG. 7 can occur through the animation of the steering wheel indicator 220, front wheel steering indicator 230, and rear wheel steering indicator 240, along with the change in the vehicle model's 200 motion. This allows the operational status of the chassis components to be intuitively displayed according to the vehicle's behavioral changes.

When the front and rear wheels of a vehicle operate in opposite directions, the processor 100 can adjust the graphic elements of each wheel in the vehicle model 200 differently so that the operation of the front and rear wheels can be distinguished from each other. That is, different visual effects can be displayed for the front and rear wheels respectively. For example, the front wheels may be represented by solid line graphic elements, while the rear wheels may be represented by dashed line graphic elements. Alternatively, visual elements such as different colors or directional arrows indicating the rotation direction of each wheel may be superimposed at the respective wheel positions based on the rotation direction of each wheel. Through this, the processor 100 may allow the user to intuitively understand the current steering state of the vehicle.

In addition to the described graphic elements, the display device 300 can output various graphic elements such as a home icon to return to the initial screen, a settings icon to manipulate various settings, a gear icon indicating gear status, a speed icon indicating driving speed, and elements for changing the viewpoint, rotating, zooming in, or zooming out of the vehicle model 200. It will be apparent to one skilled in the art that various other graphic elements not described herein may also be included.

Referring to FIG. 8, the display device 300 can configure a screen to provide the driver with driving information, including the operational status of chassis components, while the vehicle is in motion.

Specifically, the processor 100 can calculate a turning radius corresponding to the steering angle of the steering device 30 and, based on the calculated turning radius, generate at least one of a virtual path guide line centered on each wheel of the vehicle model 200 and a tangential direction of the virtual path guide line on the contact surface of the vehicle model 200. To this end, the processor 100 can identify the steering state based on data received from the rear wheel steering angle sensor 14 included in the steering device 60. The processor 100 can generate a control signal to display the identified steering state on the rear wheel steering indicator 240 on the display module 20. Specifically, the processor 100 can receive the actual rear wheel steering angle from the rear wheel steering angle sensor 14 and compute the vehicle's rear wheel steering state. The computed rear wheel steering state can be visualized in real time via the rear wheel steering indicator 240.

The processor 100 can visually emphasize the steering direction and the size of the turning radius by adjusting a virtual path guide or a tangential direction graphic element. For example, referring to FIG. 8, the processor 100 may display comparative movement paths (P1 (first path), P2 (second path)) of the vehicle model 200 to visualize the difference between predesignated steering function activation and deactivation. Here, P1 (first path) may indicate the predicted movement path of the vehicle assuming that rear-wheel steering is not applied, while P2 (second path) may indicate the actual predicted movement path of the vehicle in the current state where rear-wheel steering is applied. When rear-wheel steering is applied to the vehicle, the processor 100 can intuitively display this information via the display module 20. This allows the driver to not only subconsciously perceive driving conveniences like a reduced turning radius or smooth lateral movement, but also visually recognize them, consciously experiencing the chassis' operational state. Furthermore, a graphic element and text indicating that rear-wheel steering is active can be displayed near the vehicle model 200.

Looking at the front-wheel steering indicator 230, it can be indicated that the vehicle model 200 is currently operating the wheel to the left due to the driver's steering wheel operation. The front wheel steering indicator 230 allows the driver to intuitively grasp that the degree of left wheel manipulation is approximately half of the maximum steering angle. At this time, the rear wheel steering indicator 240 may display that the rear wheels are steered approximately 4 degrees to the right.

Referring to FIG. 9, the processor 100 can display visual effects on the vehicle model 200 to correspond to the vehicle's driving situation, using the vehicle model's 200 graphic information. The processor 100 can estimate the vehicle's driving road surface condition and corresponding to the estimated road surface condition, change and display the visual effects of the vehicle model's 200 bottom surface or part of the body.

As exemplified by the ground particle scattering of the vehicle model 200 in FIG. 9, visual effects corresponding to the actual vehicle's turning situation can be displayed on the vehicle model 200 based on the operation information of the steering device 30.

Additionally, the processor 100 may provide a user interface offering a separate store (not shown). Through the store offering, the processor 100 may encourage the purchase of graphic elements for the display device 300, such as background screens or styles, according to the driver's preferences. The processor 100 may provide a user interface that allows the driver to set graphics elements such as the background, day/night mode, text size, etc., on the display device 300, or to set graphics elements such as the vehicle model, the transparency of the displayed vehicle, and color according to the driver's preferences.

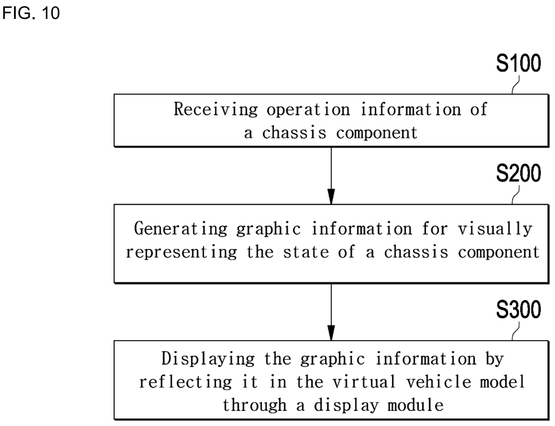

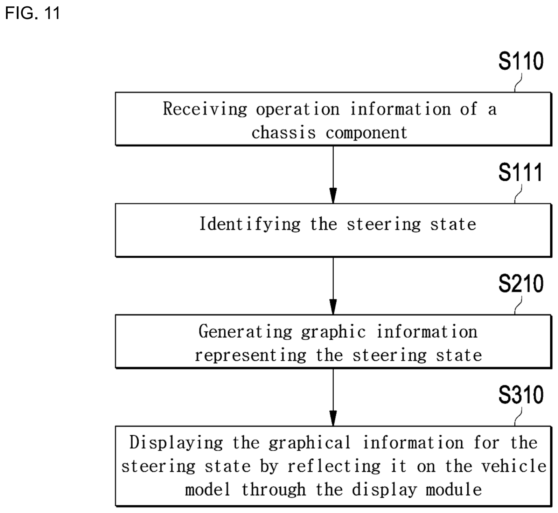

FIG. 10 is a flowchart illustrating a vehicle chassis operation visualization method according to an embodiment of the present invention, and FIG. 11 is a flowchart illustrating a steering device operation visualization method of a vehicle according to an embodiment of the present invention.

Hereinafter, the vehicle operation visualization method of the present embodiment will be described with reference to FIG. 10 and FIG. 11. Specific descriptions of parts overlapping with the aforementioned content will be omitted, and the explanation will focus on the chronological structure. The subject of each step of the vehicle operation visualization method according to an embodiment of the present invention may correspond to the processor 100. That is, the vehicle operation visualization method of the present invention corresponds to a series of control operations automatically executed by the processor 100 in conjunction with the sensor device 10, display module 20, and chassis components (30 to 50), rather than actions performed directly by a person. Therefore, the following description will focus on the actions performed by the processor 100 to explain each step.

Referring to FIG. 10, the vehicle operation visualization method comprises: step (S100) of receiving operation information of at least one chassis component from among the steering device 30, brake device 40, and suspension device 50; a step (S200) of generating graphic information for visually representing the state of the chassis component based on the input operation information, and a step (S300) of reflecting the graphic information onto a vehicle model that visually represents the vehicle body or chassis component and outputting it via a display module 20.

Specifically, the processor 100 can receive chassis component operation information from at least one of an external device and the vehicle's internal sensor device 10. For this purpose, the processor 100 can utilize at least one of the communication methods CAN, LIN, FlexRay, or Ethernet. The received operational information may include the current operational status of each chassis component, such as steering angle, brake pressure, and suspension compression/rebound amount (S100).

Subsequently, the processor 100 may generate graphic information to visually represent the state of the chassis components based on the input motion information. The generated graphic information may include visual elements not only to depict the vehicle's exterior but also to intuitively convey the dynamic behavior and state changes of each chassis component within the vehicle.

The processor 100 can generate the graphical information by adjusting one or more graphical elements for the chassis components of the vehicle model 200 or for a specific area of the vehicle body of the vehicle model 200. The vehicle model 200 can be implemented as a three-dimensional or multi-dimensional model that includes the vehicle's exterior and chassis components. The graphic elements may include at least one of transparency, outlines, surface color, gloss, shading, size, or animation effects.

The processor 100 may display a warning color or a visual emphasis effect on the display based on a state change of a chassis component being equal to or greater than a preset threshold. For example, the processor 100 may generate graphic information indicating the direction of a wheel according to a change in the steering angle, or apply a red highlight to the corresponding wheel of the vehicle model 200 by adjusting a graphic element when the brake pressure exceeds the threshold.

The processor 100 may also change the transparency of the vehicle model 200 so that the model becomes transparent, based on the state change of the chassis component being equal to or greater than a preset threshold. Subsequently, when the state change of the chassis component is restored to less than the preset threshold, the processor 100 may change the transparency of the vehicle model 200 so that it becomes opaque again.

Alternatively, the processor 100 may display a chassis model of the chassis component based on a state change of the chassis component being equal to or greater than a preset threshold. Subsequently, when the state change of the chassis component is restored to less than the preset threshold, the processor 100 may remove the chassis model of the chassis component(S200).

The processor 100 can reflect the graphic information onto a vehicle model 200 that visually represents the vehicle body or chassis components and output it via a display module 20. In doing so, the processor 100 can precisely map the generated graphic information to the corresponding location and area of the vehicle model 200, thereby matching the real-time changing vehicle state to the vehicle model 200. The display module 20 can visually output the primary operational states of vehicle chassis components, such as the steering device 30, brake device 40, and suspension device 50, through this graphic information.

Meanwhile, when motion information exceeding a preset threshold is received, the processor 100 may output an audible warning or a visual warning via graphical information regarding the operational status of the chassis component. The threshold criteria may be defined as conditions deviating from pre-set normal ranges for each chassis component, such as sudden changes in steering angle, abnormal increases in brake pressure, or excessive displacement of suspension stroke.

The processor 100 may provide an audible alert via a warning tone or generate a visual warning using graphic information when the condition is satisfied. The visual warning may be implemented by highlighting the location of the abnormality on the vehicle model 200, or through forms such as flashing, color changes, or icon displays. For example, if the brake temperature exceeds the limit value, the corresponding wheel may be displayed flashing red or an overlay warning icon may be displayed to enable the driver to immediately recognize the location of the abnormality (S300).

Referring to FIG. 11, the steering device 30 operation visualization method according to an embodiment of the present invention includes: a step (S110) of receiving input steering device 30 operation information; a step (S111) of identifying the steering state based on the input steering device 30 operation information; generating graphic information for the identified steering state (S210), and outputting the generated graphic information via a display module 20 by reflecting it onto a vehicle model 200 (S310).

Specifically, the processor 100 may receive input of the steering device 30's operation information. The operation information may include steering angle, steering angle change rate, steering torque, steering direction and angle of the front and rear wheels, etc. The operation information may be collected via the vehicle's CAN communication network or acquired through sensors (e.g., steering angle sensor) mounted on the steering device 30 itself. The operation information input cycle may be set to a short cycle of, for example, 100ms or less, but is not limited thereto (S110).

Based on the input motion information, the processor 100 can identify the current steering state of the vehicle. Details regarding the steering state identification by the processor 100 are omitted as they duplicate the preceding description (S111).

Subsequently, the processor 100 can generate graphical information corresponding to the steering state. Specifically, the processor 100 can adjust the graphical elements of each wheel of the vehicle model 200 based on the operation information of the steering device 30. For example, the processor 100 can increase the transparency of the vehicle body of the vehicle model 200 so that the steering state of each wheel of the vehicle model 200 is visually identifiable.

When the front and rear wheels of a vehicle rotate in opposite directions, the processor 100 can adjust the graphical elements of each wheel in the vehicle model 200 differently so that the movements of the front and rear wheels can be distinguished from each other. That is, when detecting heterogeneous rotational movements (e.g., RWS situations) such as the front wheels turning left and the rear wheels turning right during steering maneuvers, the processor 100 can adjust the graphic elements of the vehicle model 200 to intuitively convey this steering difference to the driver. For example, the processor 100 can display graphic elements such as directional indicator lines or rotation angle animations for each wheel within the vehicle model 200 differently for each wheel. Alternatively, it can apply a visual effect showing the front wheels turning left with a blue directional line, and a visual effect showing the rear wheels turning right with a red directional line. Through the adjustment of graphic elements, the driver can clearly perceive the difference in rotation direction between the front and rear wheels.

Additionally, the processor 100 can calculate a turning radius corresponding to the steering angle of the steering device 30, and based on the calculated turning radius, generate at least one of a virtual path guide line centered on each wheel of the vehicle model 200 and a tangent direction of the virtual path guide line on the contact surface of the vehicle model 200. The calculated turning radius may represent the curvature radius of the trajectory the vehicle will follow when turning at its current steering state. The processor 100 generates the expected turning path of the vehicle as a curved line and may visualize the tangential direction together based on the shape or direction of this path guide line.

The processor 100 can visually emphasize the steering direction and the size of the turning radius by modifying the color, thickness, transparency, or animation effects of the virtual path guide line or tangent direction graphic element. Specifically, the processor 100 can perform visual emphasis such that a larger steering angle is represented by a curve with a shorter radius by adjusting the color, thickness, transparency, or animation effects of the generated virtual path guide or the graphic element indicating the tangential direction (S210).

The processor 100 can reflect the graphic information onto the vehicle model 200 and output it via the display module 20. At this time, the processor 100 can output the virtual path guidance information together with the vehicle model 200 onto the ground plane. The virtual guidance information can be displayed as a virtual guide line centered on the wheel whose steering angle is changing.

As described above, The vehicle operation visualization device, method, and display device according to an embodiment of the present invention can align the ride comfort and visual experience of the driver and/or passengers, provide satisfaction, and naturally induce purchases of higher-end products or FoD (Feature On Demand) subscriptions, etc., by visualizing and displaying operation information, including the chassis operating status of the vehicle during driving, through an intuitive user interface.

Meanwhile, the disclosed embodiments may be implemented in the form of a recording medium storing computer-executable instructions. The instructions may be stored in the form of program code, and when executed by a processor, may generate a program module to perform the operations of the disclosed embodiments. The recording medium may be implemented as a computer-readable recording medium.

Computer-readable storage media includes any type of storage medium on which instructions decodable by a computer are stored. Examples include ROM (Read-Only Memory), RAM (Random Access Memory), magnetic tape, magnetic disk, flash memory, optical data storage devices, and the like.

Storage media readable by a device may be provided in the form of non-transitory storage media. Here, 'non-transitory' merely means that the storage medium is a tangible device and does not contain a signal (e.g., an electromagnetic wave). This term does not distinguish between cases where data is stored semi-permanently on the storage medium and cases where it is stored temporarily. For example, a 'non-transitory storage medium' may include a buffer where data is stored temporarily.

The embodiments disclosed herein have been described with reference to the accompanying drawings. Those skilled in the art to which the present invention pertains will understand that the invention may be practiced in forms different from the disclosed embodiments without changing the technical concept or essential features of the invention. The disclosed embodiments are illustrative and should not be interpreted as limiting.

## Claims

1. A method for visualizing vehicle operation, comprising:
displaying a vehicle model; and
changing at least one graphic element of the vehicle model to visually represent a state change of a chassis component of the vehicle, including a steering device, based on operation information reflecting steering characteristics of the chassis component,
wherein the operation information includes at least one of a steering angle, a steering torque, or a rear-wheel steering angle of the steering device.

2. The method of claim 1, wherein the graphic element includes at least one of transparency, color, brightness, contrast, or an animation effect.

3. The method of claim 2, wherein the state change of the chassis component includes at least one of a steering angle of the steering device, a braking force of a brake device, or a stroke amount of a suspension device.

4. The method of any of claims 1 to 3, wherein a warning color or a visual emphasis effect is displayed on the display based on the state change of the chassis component being equal to or greater than a preset threshold.

5. The method of claim any of claims 1 to 4, wherein the act of changing at least one graphic element of the vehicle model for display includes changing a transparency of the vehicle model so that the vehicle model becomes transparent, based on the state change of the chassis component being equal to or greater than a preset threshold.

6. The method of claim 5, wherein the act of changing at least one graphic element of the vehicle model for display includes changing a transparency of the vehicle model so that the vehicle model becomes opaque, based on the state change of the chassis component being restored to less than the preset threshold.

7. The method of any of claims 1 to 6, wherein the method further comprises displaying a chassis model of the chassis component based on the state change of the chassis component being equal to or greater than a preset threshold.

8. The method of any of claims 1 to 7, wherein the method further comprises removing a chassis model of the chassis component based on the state change of the chassis component being restored to less than a preset threshold.

9. The method of any of claims 1 to 8, wherein the method further comprises:
acquiring operation data from at least one chassis component among a steering device, a brake device, and a suspension device of the vehicle; and
generating operation information of the at least one chassis component based on the operation data.

10. The method of any of claims 1 to 9, wherein a road surface condition of the vehicle is estimated, and
a visual effect of a floor surface or a portion of a vehicle body of the vehicle model is changed and displayed in response to the estimated road surface condition.

11. The method of any of claims 1 to 10, wherein a rotation direction around front or rear wheels of the vehicle model is changed and displayed according to a magnitude and direction of a steering angle of the steering device.

12. The method of claim 11, wherein, when the front wheels and the rear wheels of the vehicle model rotate in opposite directions, different visual effects are displayed respectively on the front wheels and the rear wheels.

13. The method of claim 11 or 12, wherein a virtual path guidance line is displayed around the front or the rear wheels of the vehicle model in response to the steering angle of the steering device.

14. The method of claim 13, wherein the path guidance line is displayed in a curved shape centered on a rotation center point of the steering angle, and a curvature of the curve increases as the magnitude of the steering angle increases.

15. A display device for displaying a vehicle model,
wherein the display device (20) is configured to:
change at least one graphic element of the vehicle model to visually indicate a state change of a chassis component of the vehicle, including a steering device (30), based on operation information reflecting a steering characteristic of the chassis component,
wherein the operation information includes at least one of a steering angle, a steering torque, or a rear-wheel steering angle of the steering device (30).
